# EUROPEAN PATENT SPECIFICATION

(11) **EP 3 852 006 B1**
(45) Date of publication and mention of the grant of the patent: **10.09.2025**
(21) Application number: 20152757.9
(22) Date of filing: 20.01.2020
(51) Int. Cl.: G06V 40/20

(54) **GESTURE-BASED CONTROL OF A MEASURING DEVICE**
GESTENBASIERTE STEUERUNG EINER MESSVORRICHTUNG
COMMANDE D'UN DISPOSITIF DE MESURE BASÉE SUR DES GESTES

(43) Date of publication of application: 21.07.2021
(73) Proprietor: Hexagon Technology Center GmbH, 9435 Heerbrugg (CH)
(72) Inventor: METZLER, Bernhard, 6850 Dornbirn (AT); MÜLLER, Josef, 9413 Oberegg (CH)
(74) Representative: Kaminski Harmann

(56) References cited:
- US-A1- 2014 002 806
- US-A1- 2014 327 920
- TRENKLE ANDREAS ET AL: "Interpretation of pointing gestures for the gesture controlled transportation robot "FiF", 2015 ANNUAL IEEE SYSTEMS CONFERENCE (SYSCON) PROCEEDINGS, IEEE, 13 April 2015 (2015-04-13), pages 721 - 726, XP032782383, DOI: 10.1109/SYSCON.2015.7116836
- MAZHAR OSAMA ET AL: "Towards Real-Time Physical Human-Robot Interaction Using Skeleton Information and Hand Gestures", 2018 IEEE/RSJ INTERNATIONAL CONFERENCE ON INTELLIGENT ROBOTS AND SYSTEMS (IROS), IEEE, 1 October 2018 (2018-10-01), pages 1 - 6, XP033491654, [retrieved on 20181227], DOI: 10.1109/IROS.2018.8594385

## Description

The present invention pertains to a method of controlling a measuring device using gestures. The measuring device in particular is configured for a laser-based measuring of coordinates of remote points, and for instance can be a laser tracker, a total station or a laser scanner. More specifically, the method comprises defining a measurement point or area to be measured by a measuring device by one or more gestures that are carried out by the operator. The gestures are captured with a camera or another capturing device of the measuring device. Based on gesture-recognition algorithms applied onto the image stream from the camera, the definition of the measurement point or area is determined. The invention also pertains to a system comprising a measuring device, wherein the system is configured for performing such a method.

Measuring a point or area at least comprises determining a distance to said point or to one or more points in said area. In particular, it comprises determining three-dimensional (3D) coordinates of said point or of a plurality of points in said area in a reference coordinate system of the measuring device.

With devices and methods known in the art, a measurement point is selected by aligning the telescope of a total station or similar device with the target point, e.g. by aligning the cross hairs with the point to be measured. Alternatively, a measurement point or scanning area can be defined in an image of the measuring object. In this case, an image of the object with a camera integrated in the measuring device is captured and displayed to the operator. In this image the operator can tip on a point for selecting the target or mark a region for defining the scanning area.

US 2017/0176169 A1 discloses a method for a follow-operator command and a lock-on command for a laser tracker based on gestures, wherein, the focus lies on transmitting commands to the laser tracker. WO 2012/127017 A1 describes the idea to trigger a measurement routine using a gesture. However, both documents remain silent on defining measurement points or areas using gestures. US2014/327920A1 describes a laser tracker system that uses gestures either visual (captured by cameras and structured light) or electrical (via wearable EMG sensors) to allow an operator to remotely control tracker functions like measurement, target acquisition, or mode switching.

It would be desirable if the operator could control a measuring device remotely in a natural and intuitive way, thereby at least defining a point or area to be measured by the device.

It is therefore an object of the present invention to provide an improved method for controlling a laser-based measuring device.

Another object is to provide such a method, wherein the operator's hands may be free of any remote-control devices.

Another object is to provide such a method that allows the operator to be close to the object to be measured by the measuring device.

It is a particular object to provide such a method that allows using intuitive gestures to control the measuring device.

It is a particular object to provide such a method that allows using gestures that are easily comprehensible, memorable and accomplishable.

Moreover, it is an object to provide such a method, wherein intuitive gestures are used for defining a point or area to be measured by the measuring device, particularly wherein a point of interest can be defined as measurement point by pointing on it with a finger.

Moreover, it is an object to provide such a method, wherein also a measuring mode of the device can be selected using gestures, wherein a defined a point or area is measured with the selected measuring mode.

Another object of the invention is to provide a measuring device or a system comprising a measuring device that are configured to be used with such a method.

The invention is defined in the appended claims.

The invention in the following will be described in detail by referring to exemplary embodiments that are accompanied by figures, in which:
- Fig. 1: illustrates a first exemplary application of a method according to the invention, wherein a point to be measured is defined by a pointing gesture;
- Figs. 2a-c: illustrate - as steps of exemplary embodiments of a method according to the invention - a capturing of an image of the operator performing the pointing gesture, a gesture recognition based on the captured image and a target identification based on the recognized gesture;
- Figs. 3a-b: illustrate a second exemplary application of a method according to the invention, wherein an area to be measured is defined by one or more gestures;
- Fig. 4: illustrates a third exemplary application of a method according to the invention, wherein an area to be measured is defined by a painting gesture;
- Fig. 5: illustrates a fourth exemplary application of a method according to the invention, wherein an area to be measured is defined by a circling gesture;
- Figs. 6a-c: illustrate further exemplary applications of a method according to the invention, wherein areas of interest are defined by different gestures;
- Figs. 7a-c: show three examples for a sequence of gestures to be performed for controlling a measurement of the measuring device;
- Fig. 8: shows a flow-chart illustrating an exemplary embodiment of a method according to the invention; and
- Fig. 9: shows an exemplary embodiment of a glove to be used in an exemplary embodiment of a method according to the invention.

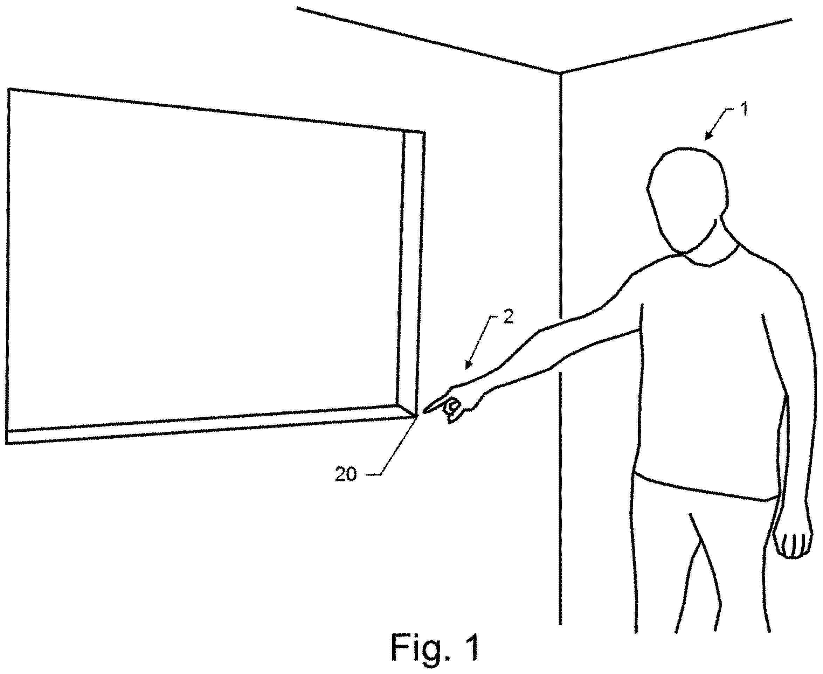

Figure 1 illustrates a first exemplary application of a method according to the invention, wherein a measuring point 20 is defined for a measuring device, e.g. a total station, a laser scanner, or a laser tracker. The measuring comprises at least a distance measurement from the device to the point 20, and may further comprise detecting three-dimensional coordinates of the point in a reference coordinate system.

A human operator 1 of the surveying device (not shown here) defines the measuring point 20 using an intuitive pointing gesture 2, i.e. pointing with his finger to the measuring point 20. In the shown example, the measuring point 20 is a corner of a window frame, coordinates of which are to be determined by the surveying device.

After having defined the measurement point 20, optionally, for triggering the measurement, the operator 1 can then perform a trigger gesture (not shown here), for instance by making a fist. Alternatively, a measurement can be triggered by voice control. For instance, the operator 1, while pointing on the measuring point 20, says "measure" to trigger the measuring by the surveying device. Alternatively, the measurement can be triggered by pressing a button on a remote or field controller or smart phone connected to the measuring device. Alternatively, the device can start the measurement without waiting for a further command - or after having waited for a defined period for further commands.

While pointing on the measuring point 20, the operator 1 and the gesture 2 are captured with a camera integrated in the measuring device, and a gesture detection algorithm is applied to the captured image which can be a single image or a video stream. From the gesture 2, the image coordinates of the measuring point 20 are determined. Then, the measuring device aims to the image coordinates and a point measurement is performed.

The gesture control can run on the device directly. Alternatively, the images can also be transmitted to a remote server or the cloud, so that the gesture detection is carried out remotely and/or using cloud computing.

After the gesture has been recognized, the measuring device can confirm, e.g. by an optical or acoustic signal or by voice feedback, that the gesture 2 has been detected, so that the operator 1 can end the gesture 2.

The pointing gesture 2 can also be used to lock into a retro-reflector (not shown). In this case, the operator 1 would point to the retro-reflector using the pointing gesture 2 and give a locking command, e.g. by saying "lock" when using voice control.

The gesture performed by the operator 1 might also indicate a desired measurement mode, e.g. whether the device should perform a single point measurement for a corner point as in the case shown in Figure 1, lock into a retro-reflector, or perform a scanning mode e.g. for an edge. For instance, the gestures for different measurement modes may differ by the number of pointing fingers. This means that for selecting an available measurement mode of the device, for instance a single-point measuring mode, a scanning mode or a retro-reflector tracking mode, another gesture defining said mode can be performed - either in advance of the pointing gesture or afterwards (e.g. immediately afterwards or at least before performing a triggering gesture). Alternatively, the pointing gesture and the scanning-mode-definition gesture can be performed as a single "combined" gesture. For instance, a number of fingers pointing may indicate the selected measuring mode, e.g. one finger representing a single-point measurement, two fingers a line scan, three fingers an area scan and four fingers a lock onto a retro-reflector.

The gestures can be performed as a sequence of static gestures, i.e. a plurality of distinct gestures that are performed consecutively, or as a dynamic gesture sequence, i.e. comprising a movement as part of the gestures.

In addition to the definition of the approximate location of the measuring point 20 with the pointing gesture 2, also the type of measuring point can be indicated. For instance, there might be different gestures for indicating a corner point, a borehole or an edge. Again, such a gesture can be performed separately, i.e. before or after the pointing gesture 2, or as a combined gesture, e.g. wherein a position of the thumb indicates whether the measuring point 20 is represented by a feature or an object.

Further gestures may be defined that may be used to specify the pointing gesture 2. For instance, if the measurement point 20 is out of reach for the operator 1, he might indicate an approximate distance between his pointing gesture 2 (i.e. his finger tip) and the measurement point 20. For instance, this could be performed by showing a number of fingers that corresponds to an approximate distance in metres. Also, a selected measurement mode could be further defined using an additional gesture. A desired point density (or speed) for a scan could be indicated this way, e.g. where five fingers mean a very high density and one finger means a very low density.

Pointing is an intuitive gesture that is understood by humans independent from their cultural background, and even by some animal species such as dogs or elephants. It is therefore a convenient method for the operator, since the gestures are easily comprehensible, memorable and accomplishable. However, although the gestures used by the operator - like the pointing gesture 2 of Figure 1 - may be intuitively comprehensible for a human, they are not for a robot. They need to be perceived by the capturing device and then be identified using an algorithm. Per se, perceiving and interpreting human gestures by means of a robot is known in the art of human-robot interaction. For instance, a method for perceiving and interpreting pointing gestures using a time-of-flight (ToF) camera and Gaussian Process Regression is described in: D. Droeschel, J. Stückler, S. Behnke, "Learning to interpret pointing gestures with a time-of-flight camera" (HRI 2011 - Proceedings of the 6th ACM/IEEE International Conference on Human-Robot Interaction, p. 481-488).

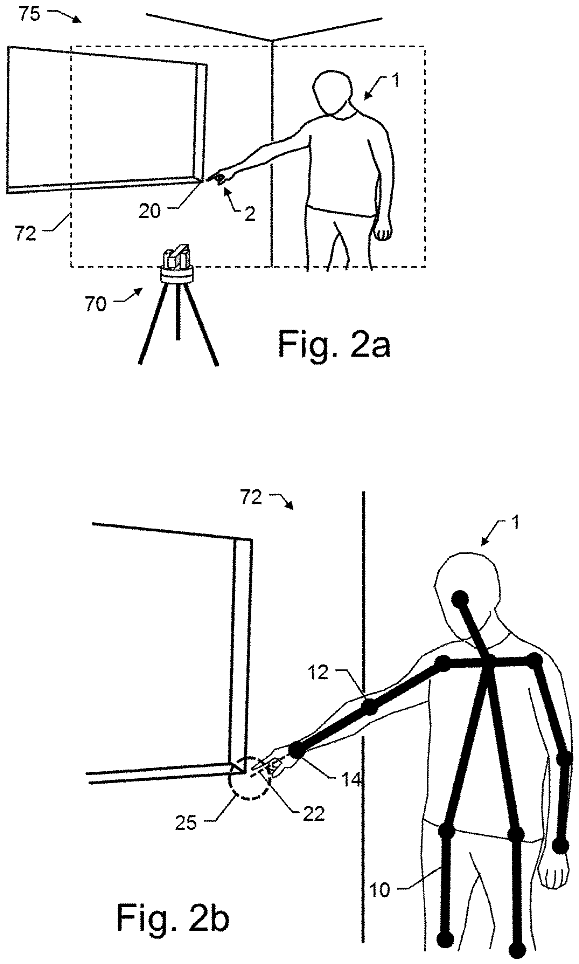

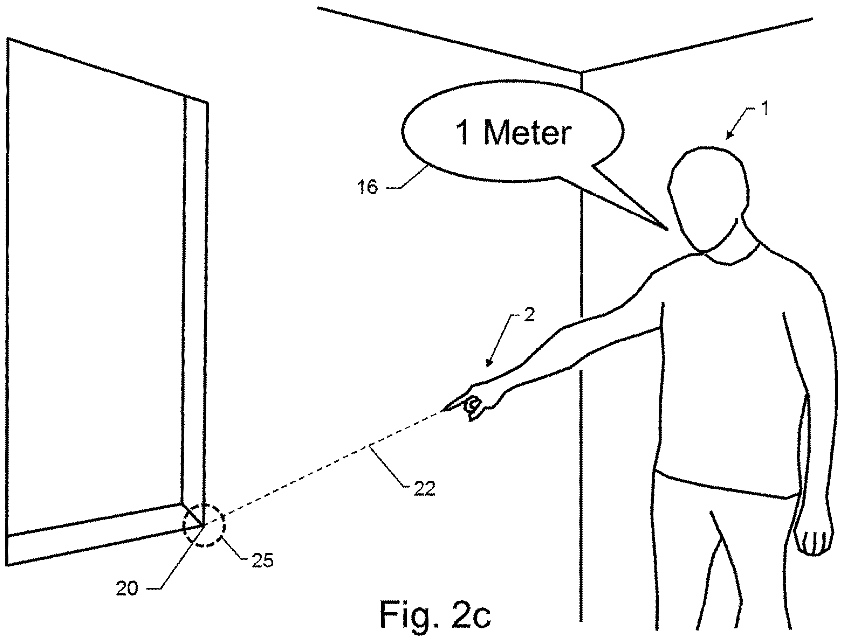

Figures 2a and 2c illustrate an exemplary way to detect and identify a gesture based on the pose of the operator 1 and to identify, based thereon, a position of a point defined by that gesture. Figure 2a shows an exemplary embodiment of a laser-based distance measuring device 70 that is positioned in a measuring surrounding 75. The device 70 comprises a capturing device having a camera for capturing images 72 of the operator 1 who is also positioned in the measuring surrounding 75. The capturing device preferably comprises means that facilitate the identification of gestures in the captured images 72, these means may comprise 3D capturing means such as a stereo camera, a ToF sensor array, or a pattern projector or other means that facilitate identifying the operator in the images 72, for instance an infrared camera or an infrared sensor array.

The device 70 preferably is configured to detect the operator 1 in the images 72 and to move the capturing device for tracking the operator 1 when moving through the measuring surrounding 75.

Figure 2b illustrates the use of an algorithm for human pose estimation. Such an algorithm can be applied on the image 72 to detect and localize the major parts and joints of the body of the operator 1 (wrist, elbow, shoulders, etc.). The output resulting from human pose estimation is a skeleton representation 10. Based on the skeleton representation 10, the location of the operator's elbow 12 and wrist 14 can be derived. The extrapolation of the elbow-wrist axis 22 leads to the region of interest 25, i.e. the region in the image 72 where the measurement point can be expected. In this region 25, algorithms for feature detection, e.g. for corner points, or object detection, e.g. for boreholes, can be applied. Even algorithms for feature and/or object detection based on machine learning or deep learning can be applied.

Alternatively, the operator 1 can point with his finger point directly onto the corner and give a targeting command such as "target". Upon this command, the surveying device aligns with the fingertip and confirms with an acoustic signal. The operator 1 can then remove the finger and give a measuring command such as "measure". Here again, before the measurement is performed, a method for accurate aiming, e.g. by feature detection or corner point detection, could be carried out in a region of interest 25 that is defined by the position of the fingertip at the time the targeting command was performed.

Figure 2c illustrates an alternative way to define a measurement point 20 using a pointing gesture 2. In the shown example of Figure 2c, based on the skeleton representation 10, positions of parts and joints of the operator's hand are detectable so that a pointing direction of the index finger 16 can be derived as an axis 26, an extrapolation of which leading to the region of interest 25. In this example, the region of interest comprising the measuring point 20 cannot be reached by the operator 1. In order to facilitate determining the designated region of interest 25, the operator - in addition to the pointing gesture 2 - gives a command indicating an approximate distance between the pointing gesture 2, i.e. his index finger 16, and the measurement point 20. In the shown example the distance is approximately one meter, and the command is a voice command 17 ("one meter"). Alternatively, the command may be another gesture, where a number of raised fingers indicates the distance.

A gesture detection algorithm detects and identifies the pointing gesture 2, and the capturing device detects and identifies the voice command 17. Controlling commands for the measuring device 70 that are associated with the combination of identified gesture and voice command are identified. In the shown example, these may comprise determining a position of a region of interest 25 in the measuring surrounding 75, detecting features that could constitute the intended measurement point 20 inside of the region of interest 25 (e.g. using artificial intelligence and machine learning), and measuring coordinates of this point 20.

The measuring device 70 may comprise all the components necessary to perform all the method steps, i.e. the capturing device, a database comprising the pre-defined gestures, each linked with a command, and a computing unit comprising an algorithm for gesture detection and optionally also for feature or object detection.

Alternatively, all or some of these can be external components. For instance, the database can be stored on a remote server to which the device 70 is connected via the Internet, and the computations can be performed in the cloud.

Also, the capturing device can be partly or completely external. For instance, the device itself may comprise only a standard camera (or no camera at all), wherein further capturing means are connectable to the device via cable or a wireless data connection such as Bluetooth. For instance, the capturing means - that either may be integrated into the measuring device or be configured as separate devices of the measuring system - could comprise stereo cameras, time-of-flight sensor arrays, pattern projectors or infrared cameras.

For capturing voice commands, the capturing device may comprise one or more microphones. Alternatively or additionally, a lip-reading algorithm may be provided that is configured to detect the voice commands from captured images 72 of the operator's mouth. Lip-reading capability is useful e.g. for noisy surroundings or for surroundings where silence is required.

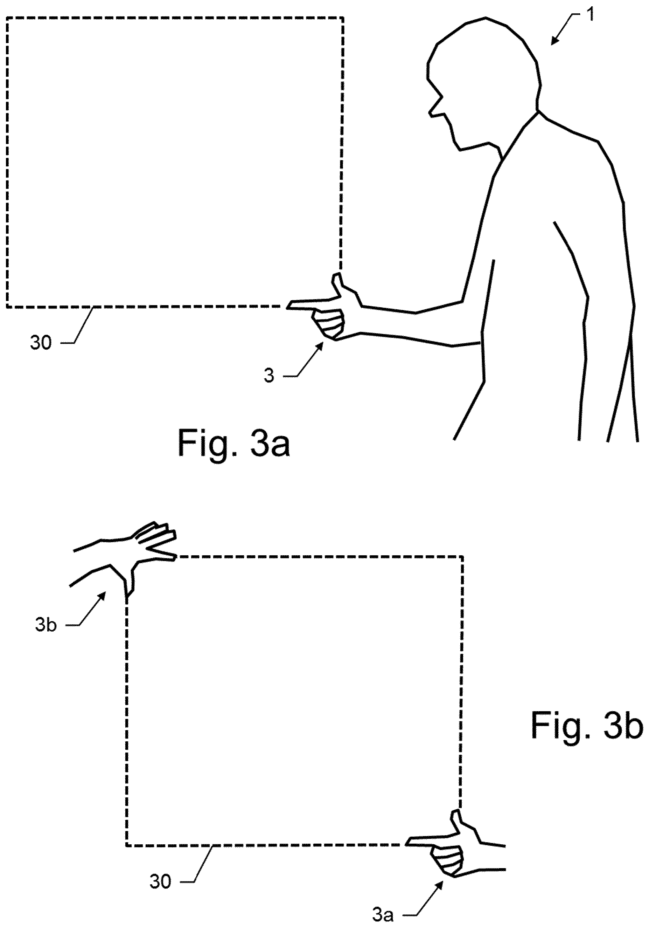

Aside from defining a single measuring point, the method can also be used to define a measuring area, e.g. for scanning. An exemplary gesture for this application is shown in Figures 3a and 3b. A specific "corner" gesture 3 can be shown by the operator 1 in order to define corners of a scanning area 30. In Figure 3a, the gesture 3 defines the lower right corner of the scanning area.

A size of the scanning area can be defined using another gesture. For instance, as illustrated in Figure 3b, by defining the lower right corner with a first gesture 3a and defining the upper left corner, e.g. by a corresponding second gesture 3b, the scanning area 30 can be defined completely. The two gestures 3a and 3b may be performed either sequentially or - using both hands - simultaneously. Advantageously, while the gestures 3a and 3b are being performed, only the gestures and not the area 30 itself need to be visible for the device, so that the operator 1 may stand in front of the area 30, blocking the view, when performing both gestures 3a and 3b simultaneously.

The gesture 3 or the gestures 3a and 3b can be preceded by another gesture for defining the measuring mode of the device. This could comprise defining whether the area 30 or its borders should be scanned, or whether the device should look for features in the area and perform measurements only to these features.

Instead of using the gestures 3a and 3b for defining the size and shape of the area 30, these can be defined by a gesture accompanying and further specifying the first gesture 3a. For instance, lengths of the side of a rectangular area could be defined by two gestures where a number of shown fingers represents a length in metres. Also, if the area is a visible feature - either shaped evenly such as a rectangular window or unevenly such as an individual piece of furniture - a corresponding measuring mode can be selected by a gesture, so that the feature can be identified by an algorithm of the device and recognized as an area 30 to be scanned.

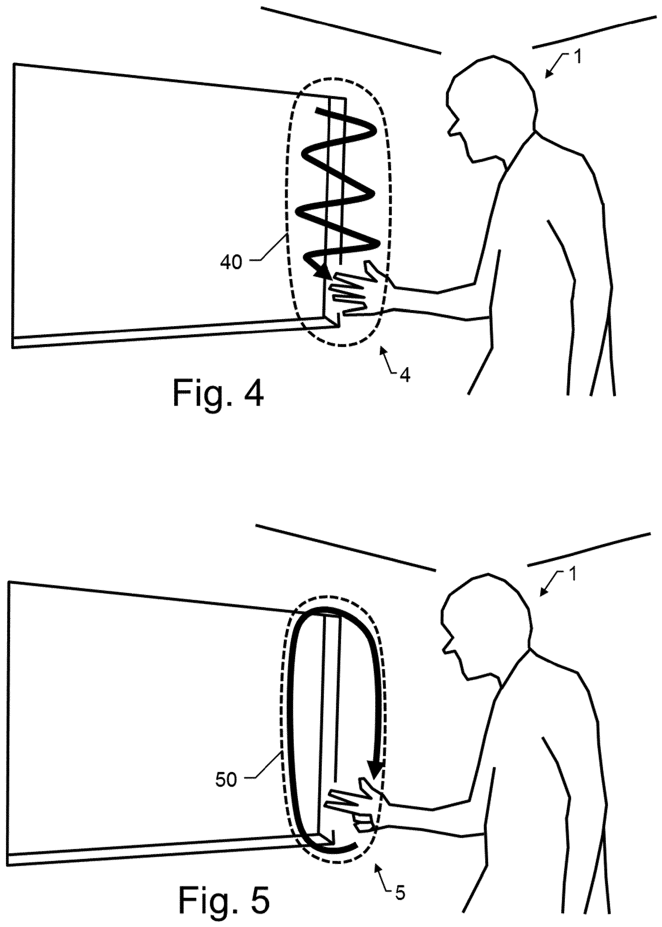

Figure 4 illustrates an alternative gesture for defining a measurement or scanning area 40. The operator 1 may use a swiping gesture 4 with his hand over the object to be measured and "paint" the area 40 using a swiping motion, similar to the brush function in image processing software. Alternatively, as shown in Figure 5, instead of "painting" the whole area 50, only the border of the area 50 can be defined by a circling gesture 5 with the operator's hand.

Alternatively or additionally, as indicated in the examples of Figures 4 and 5, the gestures 4 and 5 may comprise showing a defined number of fingers during the motion in order to indicate the desired scanning mode of the device, i.e. scanning an area 40 (five fingers) or scanning borders of an area 50 (three fingers).

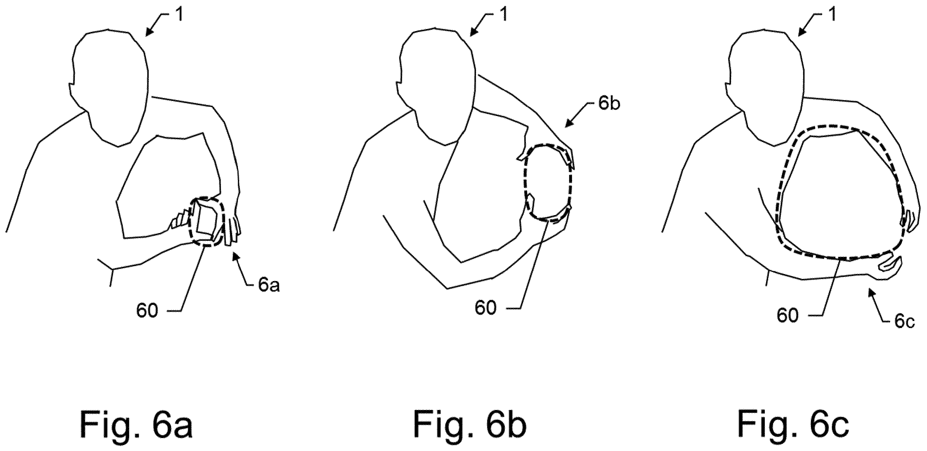

Figures 6a-c illustrates further exemplary gestures 6a, 6b, 6c for indicating an area of interest 60 and its size. Using these gestures can reduce the search time for a measuring device for finding features or objects to be measured, for instance in use cases like crack detection, target lock, prism or target search. These gestures 6a, 6b, 6c can be combined with further gestures, e.g. to select the measuring mode or provide additional information to the device what to do.

For instance, in advance of the gesture 6a, a gesture could be performed that corresponds to the selection of a single-point measuring mode, so that the gesture 6b defines the area in which the point to be measured is located, i.e. where the device searches for a detectable object or feature as a measurement point to perform a measurement to. Similarly, in advance of the gesture 6b, a gesture could be performed that corresponds to the selection of a scanning mode with a certain point density, so that the gesture 6b defines the area in which said scan should be performed. Similarly, in advance of the gesture 6c, a gesture could be performed that corresponds to the selection of a mode, in which the device uses feature recognition to detect elongated features (such as, e.g., a crack in a wall) and to measure these features. The gesture 6c is then used to define the searching area, i.e. because only one feature of several similar features should be measured.

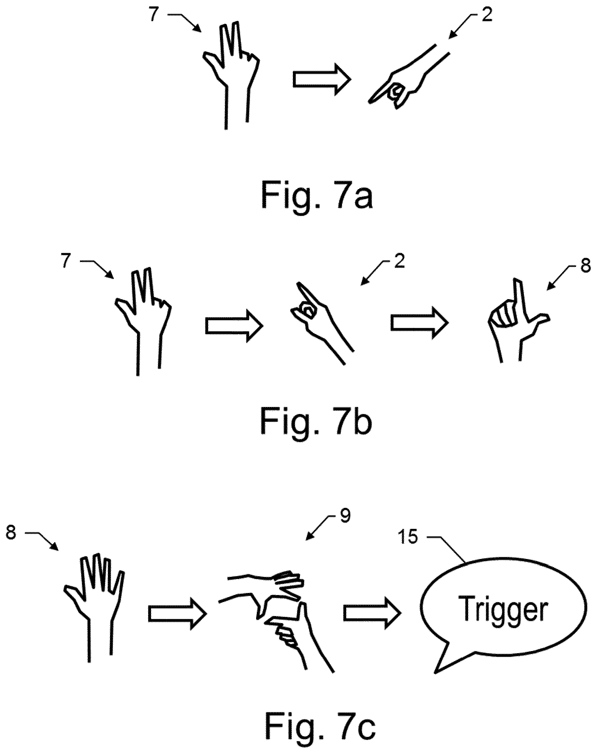

The Figures 7a, 7b and 7c illustrate three examples of gesture sequences for controlling a measurement of a measuring device. In the first example of Figure 7a, the operator first shows a first gesture 7a and then a second gesture 2. In this example, the first gesture 7a is used to select a measuring mode of the device, e.g. performing a single-point measurement to a borehole. After having detected and identified the first gesture, the device optionally may give an acoustical feedback to the operator, so that the operator knows that he may perform the second gesture 2. The second gesture 2 in this example is the pointing gesture of Figure 1 that indicates the position of the measurement point, e.g. the borehole. Again, the device may give an acoustical feedback. Then, based on the second gesture 2, the device identifies the measurement point, aligns its measuring axis towards the identified measurement point and perform the desired measurement.

The second example of Figure 7b, starts like the one of Figure 7a. However, since the measurement point is out of direct reach of the operator, using a further specification gesture 8, the operator further defines the previous indication command given by the second gesture 2. In this case, an approximate distance of two metres between the fingertip and the measurement point is indicated by the specification gesture 8.

In the third example of Figure 7c, the operator first shows a specification gesture 8 and then a combined gesture 9, and then uses a voice control of the device by enunciating a predefined trigger command 15. Here, the specification gesture 8 is assigned to a command that specifies the following command. The next gesture is a combined gesture 9 that defines a measuring mode and an area to be measured. Together with the preceding specification gesture 8, the measuring device might be instructed to perform a search for measuring points (measuring mode) in the area defined by the fingers (measurement area), wherein there are five points to be measured in this area (specification). In this example, there is a trigger command 15 necessary to start the measurement. Such a command can be given by a trigger gesture (for instance by making a fist). In the shown example, the trigger command 15 is a verbal command.

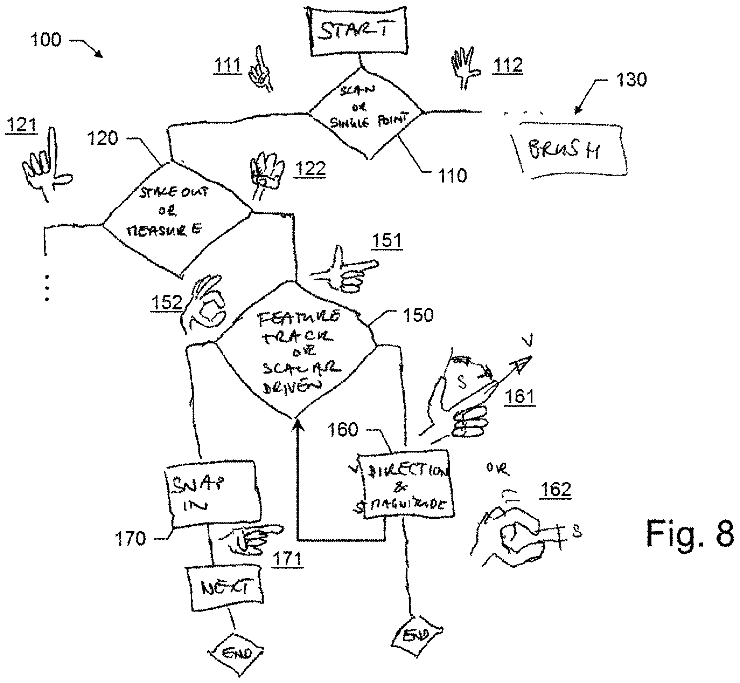

The flow-chart of Figure 8 illustrates an exemplary embodiment of a method 100 of remotely controlling a laser-based measuring device according to the invention. After starting the measuring device - or its remote control functionality - a camera (or similar capturing device) of the measuring system captures images of the user and identifies gestures that are connected to certain commands for the device. A sequence of gestures can be used to remotely select a device mode and initiate a measurement. The device may issue a feedback when a gesture has been recognized, e.g. by a light or sound signal or by a voice response related to the command to which a recognized gesture is connected.

Optionally, a gesture or a sequence of gestures will have to be performed in order to start the method 100. In one embodiment, a code may be entered in the form of a number of different gestures in order to start the device. This code may be user-selected and can serve as a theft protection for the device.

In the illustrated example, in step 110, a measuring mode of the device is selected by the user showing one of the two hand gestures 111 and 112, wherein a first gesture 111 is used to select a single-point mode, and a second gesture 112 is used to select a scanning mode 130, wherein the area to be scanned may be defined using one of the "brushing" or swiping gestures illustrated in Figures 4 and 5.

In the shown example, the device's single-point mode is selected using the first gesture 111. In the next step 120, using one of the two hand gestures 121 and 122, the user can select, whether the device should perform a measurement towards a single point or execute a different mode, such as, e.g., a stake-out mode (not shown here).

In the shown example, the device's single-point measuring mode is selected using the gesture 122. In the next step 150, using one of the two hand gestures 151 and 152, the user can select a guidance mode, i.e. whether the device should perform a scalar mode 160 or a snapping mode 170 to have its laser beam be guided to the point to be measured.

If the scalar mode 160 is selected using the first guidance-mode-selection gesture 151, the user guides the laser beam towards the measurement point using one or more scalar pointing gestures 161, 162 to indicate a direction (V) towards this point and a magnitude (S) that is dynamically selected by the user. The magnitude may be related to an angle between the actual pointing direction of the laser beam and the direction to the measurement point. It can also depend on a desired speed of the laser beam moving towards the measurement point.

The first scalar pointing gesture 161 shown in Figure 8 combines a pointing gesture with the index finger to indicate the direction to the measurement point and a scalar gesture with the thumb to indicate the magnitude. For instance, moving the thumb upwards might accelerate a rotating movement of a laser-beam emitting part of the measuring device in the indicated direction, and moving the thumb downwards might decelerate the movement. The second scalar pointing gesture 162 indicates with the index finger and the thumb the direction to the measurement point, wherein a distance between index finger and thumb is used to indicate the magnitude. Alternatively, a pointing gesture followed by a scalar gesture can be used instead of a single gesture combining the two.

If the snapping mode 170 is selected using the second guidance-mode-selection gesture 152, a feature and object detection algorithm detects features or objects in the captured images that constitute or define potential candidates for measurement points. Optionally, the laser beam is automatically aimed onto a first point of these potential measurement points. The beam generates a visible spot at the first point, so that the user knows at which point the device aims the beam. Using gesture 171, the user can reject the first point, so that the device aims the laser beam to another one of the potential measurement points. Optionally, the user may point into the direction of the measurement point, i.e. that point that he intends to have measured by the device, so that the new potential measurement point is closer to the intended measurement point than the last one. If the laser beam is aimed at the correct point, the user can confirm this with another gesture so that the point is measured.

In one embodiment of the method and system, for every command, the corresponding gesture or gestures may be selectable or even definable by the user. For instance, a user may browse through a graphical user interface (GUI) of the device, select a certain command and then perform a gesture that is captured by a camera to connect this gesture with the selected command. Alternative, the user may select from a multitude of pre-defined gestures.

Optionally, the new gesture defined by the user may be compared to existing gestures assigned to a command of the device. If the user-defined gesture already exists or is very similar to one or more existing gestures, e.g. if it appears likely that the gesture-detection algorithm will get confused by the similarity of the gestures, the new gesture may be rejected by the system and the user can be requested to choose a different gesture and/or to change the assignment of the existing gestures and commands.

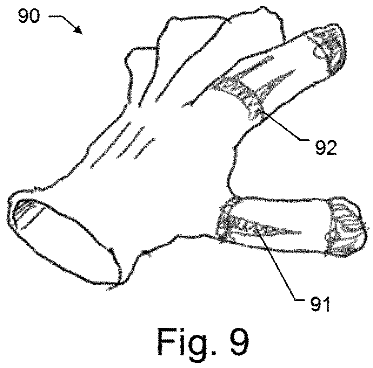

Figure 9 shows a glove 90 to be used with an exemplary embodiment of a method according to the invention. The glove may be worn by the user when performing gestures. The glove 90 comprises visible markings or tags 91, 92 that are provided on the fingers. These tags 91, 92 and their position on the glove are known to the capturing device which is configured to detect them in the images. This facilitates identifying the hand and its posture in the image, including the pose of each individually tagged finger, so that a gesture performed by the hand can be determined easier, faster and with fewer errors. Also other pieces of clothing, e.g. sleeves or caps, may be tagged accordingly to facilitate identification of the user and his posture in the images.

Specifications of the tags 91, 92 such as a shape and colour of each tag as well as the tags' positions on the glove (e.g. what each finger's tag looks like) can be stored in the same database of the measuring system as the gestures.

Although the invention is illustrated above, partly with reference to some preferred embodiments, it must be understood that numerous modifications and combinations of different features of the embodiments can be made. All of these modifications lie within the scope of the appended claims. In particular, all gestures and their combinations are purely exemplary. Other intuitive gestures can be used instead. They may be predefined by a manufacturer of a measuring system as well as customizable by a user of the system.

## Claims

1. Method (100) of remotely controlling a laser-based measuring device (70), the measuring device comprising a capturing device configured to capture images (72) of an operator (1) of the measuring device (70) in a measuring surrounding (75), the method comprising
- providing a database comprising a multitude of pre-defined gestures (2-9), each gesture being assigned to a command for the measuring device (70),
- capturing, by the capturing device, images of the operator (1),
- identifying at least one pre-defined gesture (2-9) in the images (72) using a gesture detection algorithm, and
- performing a measuring operation of the measuring device (70),
wherein
- the measuring device (70) has at least two different measuring modes;
- the commands comprise target definition commands and mode selection commands, wherein target definition commands are related to defining one or more measurement points (20) or a measurement area (30, 40, 50, 60) in the measuring surrounding (75) to be measured by the measuring device (70), and mode selection commands are related to selecting a measuring mode of the measuring device for measuring the defined measurement point (20) or measurement area (30, 40, 50, 60);
- the images (72) comprise at least a first gesture (2-6) and a second gesture (7) performed by the operator (1), wherein the first gesture is a pre-defined gesture that is assigned to a target definition command, and the second gesture (7) is a pre-defined gesture that is assigned to a mode selection command; and
- identifying the at least one pre-defined gesture in the images (72) comprises identifying the first gesture (2-6) and the second gesture (7),
**characterized in that**
- the images (72) comprise a dynamic gesture sequence including at least the first gesture (2-6) and the second gesture (7);
- the gesture detection algorithm derives, based on the identified first gesture (2-6), a region of interest (25) in the at least one image (72) and, based on the identified second gesture (7), a selected measuring mode;
- a feature detection algorithm and/or an object detection algorithm are used to detect features or objects in the region of interest (25) which features or objects define the one or more measurement points (20) or the measurement area (30, 40, 50, 60); and
- performing the measuring operation comprises using the selected measuring mode to automatically
- measure the defined one or more measurement points (20) by performing one or more single-point measurements, or
- scan the defined measurement area (30, 40, 50, 60), thereby determining three-dimensional coordinates of a multitude of points in the measurement area (30, 40, 50, 60).

2. Method (100) according to claim 1, wherein identifying the first gesture (2-6) comprises using a machine learning algorithm or a deep learning algorithm for detecting the first gesture (2-6) in the images (72) and/or for classifying the detected first gesture (2-6).

3. Method (100) according to claim 1, wherein the first gesture comprises a pointing gesture (2), and the target definition commands comprise at least one distance definition command indicating a distance between the pointing gesture (2) and the region of interest (25), wherein the images (72) comprise at least a distance definition gesture performed by the operator (1), wherein the distance definition gesture is a pre-defined gesture that is assigned to a distance definition command, identifying the at least one pre-defined gesture in the images (72) comprises identifying the distance definition gesture, and the gesture detection algorithm is configured to determine, based on the identified first gesture (2-6) and based on the identified distance definition gesture, the region of interest (25) defined by the operator (1).

4. Method (100) according to claim 1, wherein the first gesture comprises a pointing gesture (2), and the target definition commands comprise at least one distance definition command indicating a distance between the pointing gesture (2) and the region of interest (25), wherein the database comprises a multitude of voice commands (15, 17) for the measuring device (70), the voice commands comprising the at least one spoken distance definition command (17), the at least one spoken distance definition command (17) is received by the capturing device, and the gesture detection algorithm is configured to determine, based on the identified first gesture (2-6) and based on the spoken distance definition command (17), the measurement point (20) defined by the operator (1).

5. Method (100) according to any one of the preceding claims,
wherein the at least two different measuring modes comprise one or more of
- a single-point measurement, particularly comprising determining three-dimensional coordinates of a measurement point (20),
- a scan of a measurement area (30, 40, 50, 60), particularly comprising determining three-dimensional coordinates of a multitude of points in the measurement area, and
- a lock onto a retro-reflector, particularly comprising determining three-dimensional coordinates of the retro-reflector;
in particular wherein at least one combination of a target definition command and a mode selection command is inoperative, wherein
- identifying the first gesture (2-6) comprises ignoring, after a second gesture (7) assigned to a mode selection command has been identified, those first gestures (2-6) that are assigned to a target definition command, a combination of which with the mode selection command is inoperative; and/or
- identifying the second gesture (7) comprises ignoring, after a first gesture (2-6) assigned to a target definition command has been identified, those second gestures (7) that are assigned to a mode selection command, a combination of which with the target definition command is inoperative.

6. Method (100) of remotely controlling a laser-based measuring device (70), the measuring device comprising a capturing device configured to capture images (72) of an operator (1) of the measuring device (70) in a measuring surrounding (75), the method comprising
- providing a database comprising a multitude of pre-defined gestures (2-9), each gesture being assigned to a command for the measuring device (70),
- capturing, by the capturing device, images of the operator (1),
- identifying at least one pre-defined gesture (2-9) in the images (72) using a gesture detection algorithm, and
- performing a measuring operation of the measuring device (70),
wherein the measuring device (70) has at least two different measuring modes,
**characterized in that**
- the commands comprise combined commands related to measuring a defined measurement point (20) or measurement area (30, 40, 50, 60) with a user-selected measuring mode of the measuring device (70),
- the images (72) comprise a combined gesture (9), wherein the combined gesture (9) is a pre-defined gesture assigned to a combined command,
- identifying the at least one pre-defined gesture comprises identifying the combined gesture (9),
- the gesture detection algorithm derives, based on the identified combined gesture (9), a region of interest (25) in the at least one image (72) and a selected measuring mode,
- a feature detection algorithm and/or an object detection algorithm are used to detect features or objects in the region of interest (25) which features or objects define the one or more measurement points (20) or the measurement area (30, 40, 50, 60), and
- performing the measuring operation comprises using the selected measuring mode to automatically
- measure the defined one or more measurement points (20) by performing one or more single-point measurements, or
- scan the defined measurement area (30, 40, 50, 60), thereby determining three-dimensional coordinates of a multitude of points in the measurement area (30, 40, 50, 60).

7. Method (100) according to any one of the preceding claims, wherein
- the commands further comprise mode specification commands, each specification command being related to a specification or modification of the selected measuring mode;
- the images (72) further comprise a specification gesture (8) performed by the operator (1), wherein the specification gesture (8) is a pre-defined gesture that is assigned to a mode specification command;
- identifying the at least one pre-defined gesture (2-9) in the images (72) comprises identifying the specification gesture (8); and
- the measuring operation is performed with the specification or modification of the mode specification command to which the specification gesture (8) is assigned,
particularly wherein the specification commands comprise a specification of a point density or a measuring speed in a scan mode.

8. Method (100) according to any one of the preceding claims, wherein the commands further comprise at least one target specification command and/or at least one trigger command, wherein
- each target specification command is related to a specification or modification of the defined measurement point (20) or measurement area (30, 40, 50, 60);
- the at least one trigger command is related to triggering a measurement to a previously defined measurement point (20) or measurement area (30, 40, 50, 60);
- the images (72) further comprise a specification gesture (8) and/or a trigger gesture performed by the operator (1), wherein the specification gesture (8) is a pre-defined gesture that is assigned to a target specification command and the trigger gesture is a pre-defined gesture that is assigned to a trigger command; and
- identifying the at least one pre-defined gesture (2-9) in the images (72) comprises identifying the specification gesture (8) and/or trigger gesture;
wherein,
- if the specification gesture (8) is identified, the measuring operation is performed with the specification or modification of the target specification command to which the specification gesture (8) is assigned, and
- if the trigger gesture is identified, the measuring operation is performed upon identifying the trigger gesture,
particularly wherein the target specification commands comprise at least one of
- a specification of a distance between a first gesture (2-6) and the measurement point (20) or measurement area (30, 40, 50, 60),
- a specification of a kind of measurement point (20),
- a specification of a size of a region of interest (25) and/or a number of measurement points (20) in the region of interest (25), and
- a specification of a size of a measurement area (30, 40, 50, 60).

9. Method (100) according to any one of the preceding claims, wherein identifying the at least one pre-defined gesture (2-9) in the images (72) comprises using a human pose estimation algorithm to generate a skeleton representation (10) of the body or parts thereof of the operator (1), wherein generating the skeleton representation (10) comprises detecting and localizing body parts and joints of the body of the operator (1), in particular one or more fingers and/or at least an elbow (12) and a wrist (14), particularly wherein determining the measurement point (20) or measurement area (30, 40, 50, 60) comprises
- deriving, based on the skeleton representation (10), a location of an elbow (12) and a wrist (14) of the operator (1), an elbow-wrist axis (22) and/or an axis (26) defined by an index finger (16); and
- determining the measurement point (20) or measurement area (30, 40, 50, 60) comprises deriving, based on the location of the elbow (12) and the wrist (14), based on the elbow-wrist-axis (22) and/or based on the axis (26) defined by the index finger (16), a region of interest (25) in the at least one image (72),
particularly wherein the skeleton representation (10) is generated from an image (72) in which the first gesture (2-6) has been identified.

10. Method (100) according to any one of the preceding claims, wherein the first gestures (2-6) comprise a plurality of intuitive gestures, the intuitive gestures comprising one or more pointing gestures (2), in particular wherein
- at least a subset of the pre-defined gestures (2-9) is defined by a posture of a hand of the operator (1), particularly wherein the postures differ from each other at least by different fingers of the hand being bent or straight, and
- the gesture detection algorithm is configured to detect the posture of the hand in the at least one image (72).

11. Method (100) according to any one of the preceding claims, comprising a customizing functionality allowing the operator (1) to select or define a gesture to be assigned to a command in the database, in particular wherein the method comprises
- providing, in a graphical user interface of a system comprising the measuring device (70), a multitude of commands for the measuring device (70) and a multitude of selectable pre-defined gestures to the operator, and assigning, based on a selection of a command and a gesture by the operator, the selected gesture to the selected command; and/or
- providing, in a graphical user interface of a system comprising the measuring device (70) a multitude of commands for the measuring device (70) to the operator, capturing, by the capturing device, images of the operator (1), identifying a user-defined gesture in the images using a gesture detection algorithm, and assigning, based on a selection of a command by the operator, the user-defined gesture to the selected command,
particularly wherein machine learning or deep learning is used to train the gesture detection algorithm to identify the selected or defined gesture, wherein training is based on a multitude of images of the operator (1) performing the selected or defined gesture.

12. Method (100) according to any one of the preceding claims, wherein
- the database comprises a multitude of voice commands (15, 17) for the measuring device (70),
- one or more voice commands (15, 17) are received by the capturing device, and
- performing the measuring operation of the measuring device (70) is based also on the one or more received voice commands (15, 17),
wherein the voice commands (15, 17) comprise one or more of
- trigger commands related to triggering a measurement to a previously defined measurement point (20) or measurement area (30, 40, 50, 60),
- target specification commands related to a specification or modification of the defined measurement point (20) or measurement area (30, 40, 50, 60),
- mode selection commands related to selecting one of at least two different measuring modes of the measuring device (70) for measuring a defined measurement point (20) or measurement area (30, 40, 50, 60), and
- mode specification commands related to a specification or modification of a selected measuring mode of the measuring device (70).

13. Measuring system, comprising
- a laser-based measuring device (70);
- a database comprising a multitude of pre-defined gestures (2-9), each gesture being assigned to a command for the measuring device (70);
- a capturing device configured to capture images (72) of an operator (1) of the measuring device (70) in a measuring surrounding (75), the capturing device being configured for capturing the one or more images in an image stream and/or comprising at least one of
- a stereo camera,
- a time-of-flight sensor array,
- an infrared camera or sensor array,
- a pattern projector, and
- a microphone; and
- a computing unit comprising a gesture detection algorithm configured to detect gestures in images (72) captured by the capturing device,
wherein the measuring system is configured to perform the method (100) of any one of the preceding claims.

14. Computer programme product comprising programme code which is stored on a machine-readable medium, or being embodied by an electromagnetic wave comprising a programme code segment, and having computer-executable instructions for performing, in particular when run on a computer unit of the measuring system according to claim 13, the method (100) according to any one of claims 1 to 12.

## Patentansprüche

1. Verfahren (100) zum Fernsteuern einer laserbasierten Messvorrichtung (70), wobei die Messvorrichtung eine Aufnahmevorrichtung umfasst, die dazu konfiguriert ist, Bilder (72) eines Bedieners (1) der Messvorrichtung (70) in einer Messumgebung (75) aufzunehmen, wobei das Verfahren Folgendes umfasst
- Bereitstellen einer Datenbank, die eine Vielzahl von vordefinierten Gesten (2-9) umfasst, wobei jede Geste einem Befehl für die Messvorrichtung (70) zugewiesen ist,
- Aufnehmen, durch die Aufnahmevorrichtung, von Bildern des Bedieners (1),
- Identifizieren von mindestens einer vordefinierten Geste (2-9) in den Bildern (72) unter Verwendung eines Gestenerkennungsalgorithmus und
- Durchführen eines Messvorgangs der Messvorrichtung (70),
wobei
- die Messvorrichtung (70) mindestens zwei unterschiedliche Messmodi aufweist;
- die Befehle Zieldefinitionsbefehle und Modusauswahlbefehle umfassen, wobei Zieldefinitionsbefehle Definieren eines oder mehrerer Messpunkte (20) oder eines Messbereichs (30, 40, 50, 60) in der Messumgebung (75) betreffen, die durch die Messvorrichtung (70) zu messen ist, und Modusauswahlbefehle Auswählen eines Messmodus der Messvorrichtung zum Messen des definierten Messpunkts (20) oder Messbereichs (30, 40, 50, 60) betreffen;
- die Bilder (72) mindestens eine erste Geste (2-6) und eine zweite Geste (7), die durch den Bediener (1) durchgeführt werden, umfassen, wobei die erste Geste eine vordefinierte Geste ist, die einem Zieldefinitionsbefehl zugewiesen ist, und die zweite Geste (7) eine vordefinierte Geste ist, die einem Modusauswahlbefehl zugewiesen ist; und
- das Identifizieren der mindestens einen vordefinierten Geste in den Bildern (72) Identifizieren der ersten Geste (2-6) und der zweiten Geste (7) umfasst,
**dadurch gekennzeichnet, dass**
- die Bilder (72) eine dynamische Gestensequenz umfassen, die mindestens die erste Geste (2-6) und die zweite Geste (7) beinhaltet;
- der Gestenerkennungsalgorithmus basierend auf der identifizierten ersten Geste (2-6) einen Bereich von Interesse (25) in dem mindestens einen Bild (72) und basierend auf der identifizierten zweiten Geste (7) einen ausgewählten Messmodus ableitet;
- ein Merkmalserkennungsalgorithmus und/oder ein Objekterkennungsalgorithmus verwendet wird/werden, um Merkmale oder Objekte in dem Bereich von Interesse (25) zu erkennen, wobei die Merkmale oder Objekte den einen oder die mehreren Messpunkte (20) oder den Messbereich (30, 40, 50, 60) definieren; und
- das Durchführen des Messvorgangs Verwenden des ausgewählten Messmodus umfasst, um Folgendes automatisch durchzuführen
- Messen des definierten einen oder der definierten mehreren Messpunkte (20) durch Durchführen einer oder mehrerer Einzelpunktmessungen oder
- Abtasten des definierten Messbereichs (30, 40, 50, 60), wodurch dreidimensionale Koordinaten einer Vielzahl von Punkten in dem Messbereich (30, 40, 50, 60) bestimmt werden.

2. Verfahren (100) nach Anspruch 1, wobei das Identifizieren der ersten Geste (2-6) Verwenden eines Machine-Learning-Algorithmus oder eines Deep-Learning-Algorithmus zum Erkennen der ersten Geste (2-6) in den Bildern (72) und/oder zum Klassifizieren der erkannten ersten Geste (2-6) umfasst.

3. Verfahren (100) nach Anspruch 1, wobei die erste Geste eine Zeigegeste (2) umfasst und die Zieldefinitionsbefehle mindestens einen Abstandsdefinitionsbefehl umfassen, der einen Abstand zwischen der Zeigegeste (2) und dem Bereich von Interesse (25) angibt, wobei die Bilder (72) mindestens eine Abstandsdefinitionsgeste umfassen, die durch den Bediener (1) durchgeführt wird, wobei die Abstandsdefinitionsgeste eine vordefinierte Geste ist, die einem Abstandsdefinitionsbefehl zugewiesen ist, wobei das Identifizieren der mindestens einen vordefinierten Geste in den Bildern (72) Identifizieren der Abstandsdefinitionsgeste umfasst und der Gestenerkennungsalgorithmus dazu konfiguriert ist, basierend auf der identifizierten ersten Geste (2-6) und basierend auf der identifizierten Abstandsdefinitionsgeste den Bereich von Interesse (25) zu bestimmen, der durch den Bediener (1) definiert wird.

4. Verfahren (100) nach Anspruch 1, wobei die erste Geste eine Zeigegeste (2) umfasst und die Zieldefinitionsbefehle mindestens einen Abstandsdefinitionsbefehl umfassen, der einen Abstand zwischen der Zeigegeste (2) und dem Bereich von Interesse (25) angibt, wobei die Datenbank eine Vielzahl von Sprachbefehlen (15, 17) für die Messvorrichtung (70) umfasst, wobei die Sprachbefehle den mindestens einen gesprochenen Abstandsdefinitionsbefehl (17) umfassen, der mindestens eine gesprochene Abstandsdefinitionsbefehl (17) durch die Aufnahmevorrichtung empfangen wird und der Gestenerkennungsalgorithmus dazu konfiguriert ist, basierend auf der identifizierten ersten Geste (2-6) und basierend auf dem gesprochenen Abstandsdefinitionsbefehl (17) den Messpunkt (20) zu bestimmen, der durch den Bediener (1) definiert wird.

5. Verfahren (100) nach einem der vorhergehenden Ansprüche,
wobei die mindestens zwei unterschiedlichen Messmodi eines oder mehrere der Folgenden umfassen
- eine Einzelpunktmessung, insbesondere umfassend Bestimmen dreidimensionaler Koordinaten eines Messpunkts (20),
- ein Abtasten eines Messbereichs (30, 40, 50, 60), insbesondere umfassend Bestimmen dreidimensionaler Koordinaten einer Vielzahl von Punkten in dem Messbereich, und
- ein Anvisieren an einem Retroreflektor, insbesondere umfassend Bestimmen dreidimensionaler Koordinaten des Retroreflektors;
insbesondere wobei mindestens eine Kombination eines Zieldefinitionsbefehls und eines Modusauswahlbefehls unwirksam ist, wobei
- das Identifizieren der ersten Geste (2-6) Ignorieren, nachdem eine zweite Geste (7), die einem Modusauswahlbefehl zugewiesen ist, identifiziert wurde, derjenigen ersten Gesten (2-6) umfasst, die einem Zieldefinitionsbefehl zugewiesen sind, dessen Kombination mit dem Modusauswahlbefehl unwirksam ist; und/oder
- das Identifizieren der zweiten Geste (7) Ignorieren, nachdem eine erste Geste (2-6), die einem Zieldefinitionsbefehl zugewiesen ist, identifiziert wurde, derjenigen zweiten Gesten (7) umfasst, die einem Modusauswahlbefehl zugewiesen sind, dessen Kombination mit dem Zieldefinitionsbefehl unwirksam ist.

6. Verfahren (100) zum Fernsteuern einer laserbasierten Messvorrichtung (70), wobei die Messvorrichtung eine Aufnahmevorrichtung umfasst, die dazu konfiguriert ist, Bilder (72) eines Bedieners (1) der Messvorrichtung (70) in einer Messumgebung (75) aufzunehmen, wobei das Verfahren Folgendes umfasst
- Bereitstellen einer Datenbank, die eine Vielzahl von vordefinierten Gesten (2-9) umfasst, wobei jede Geste einem Befehl für die Messvorrichtung (70) zugewiesen ist,
- Aufnehmen, durch die Aufnahmevorrichtung, von Bildern des Bedieners (1),
- Identifizieren von mindestens einer vordefinierten Geste (2-9) in den Bildern (72) unter Verwendung eines Gestenerkennungsalgorithmus und
- Durchführen eines Messvorgangs der Messvorrichtung (70),
wobei die Messvorrichtung (70) mindestens zwei unterschiedliche Messmodi aufweist,
**dadurch gekennzeichnet, dass**
- die Befehle kombinierte Befehle betreffend das Messen eines definierten Messpunkts (20) oder Messbereichs (30, 40, 50, 60) mit einem durch den Benutzer ausgewählten Messmodus der Messvorrichtung (70) umfassen,
- die Bilder (72) eine kombinierte Geste (9) umfassen, wobei die kombinierte Geste (9) eine vordefinierte Geste ist, die einem kombinierten Befehl zugewiesen ist,
- das Identifizieren der mindestens einen vordefinierten Geste Identifizieren der kombinierten Geste (9) umfasst,
- der Gestenerkennungsalgorithmus basierend auf der identifizierten kombinierten Geste (9) einen Bereich von Interesse (25) in dem mindestens einen Bild (72) und einen ausgewählten Messmodus ableitet,
- ein Merkmalserkennungsalgorithmus und/oder ein Objekterkennungsalgorithmus dazu verwendet wird/werden, Merkmale oder Objekte in dem Bereich von Interesse (25) zu erkennen, wobei die Merkmale oder Objekte den einen oder die mehreren Messpunkte (20) oder den Messbereich (30, 40, 50, 60) definieren, und
- das Durchführen des Messvorgangs Verwenden des ausgewählten Messmodus umfasst, um Folgendes automatisch durchzuführen
- Messen des definierten einen oder der definierten mehreren Messpunkte (20) durch Durchführen einer oder mehrerer Einzelpunktmessungen oder
- Abtasten des definierten Messbereichs (30, 40, 50, 60), wodurch dreidimensionale Koordinaten einer Vielzahl von Punkten in dem Messbereich (30, 40, 50, 60) bestimmt werden.

7. Verfahren (100) nach einem der vorhergehenden Ansprüche, wobei
- die Befehle ferner Modusspezifikationsbefehle umfassen, wobei jeder Spezifikationsbefehl eine Spezifikation oder Modifikation des ausgewählten Messmodus betrifft;
- die Bilder (72) ferner eine Spezifikationsgeste (8) umfassen, die durch den Bediener (1) durchgeführt wird, wobei die Spezifikationsgeste (8) eine vordefinierte Geste ist, die einem Modusspezifikationsbefehl zugewiesen ist;
- das Identifizieren der mindestens einen vordefinierten Geste (2-9) in den Bildern (72) Identifizieren der Spezifikationsgeste (8) umfasst; und
- der Messvorgang mit der Spezifikation oder Modifikation des Modusspezifikationsbefehls durchgeführt wird, dem die Spezifikationsgeste (8) zugewiesen ist,
insbesondere wobei die Spezifikationsbefehle eine Spezifikation einer Punktdichte oder einer Messgeschwindigkeit in einem Abtastmodus umfassen.

8. Verfahren (100) nach einem der vorhergehenden Ansprüche, wobei die Befehle ferner mindestens einen Zielspezifikationsbefehl und/oder mindestens einen Auslösebefehl umfassen, wobei
- jeder Zielspezifikationsbefehl eine Spezifikation oder Modifikation des definierten Messpunkts (20) oder Messbereichs (30, 40, 50, 60) betrifft;
- der mindestens eine Auslösebefehl Auslösen einer Messung für einen zuvor definierten Messpunkt (20) oder Messbereich (30, 40, 50, 60) betrifft;
- die Bilder (72) ferner eine Spezifikationsgeste (8) und/oder eine Auslösegeste umfassen, die durch den Bediener (1) durchgeführt wird, wobei die Spezifikationsgeste (8) eine vordefinierte Geste ist, die einem Zielspezifikationsbefehl zugewiesen ist, und die Auslösegeste eine vordefinierte Geste ist, die einem Auslösebefehl zugewiesen ist; und
- das Identifizieren der mindestens einen vordefinierten Geste (2-9) in den Bildern (72) Identifizieren der Spezifikationsgeste (8) und/oder Auslösegeste umfasst;
wobei,
- wenn die Spezifikationsgeste (8) identifiziert wird, der Messvorgang mit der Spezifikation oder Modifikation des Zielspezifikationsbefehls durchgeführt wird, dem die Spezifikationsgeste (8) zugewiesen ist, und
- wenn die Auslösegeste identifiziert wird, der Messvorgang nach dem Identifizieren der Auslösegeste durchgeführt wird,
insbesondere wobei die Zielspezifikationsbefehle mindestens eine der Folgenden umfassen
- eine Spezifikation eines Abstands zwischen einer ersten Geste (2-6) und dem Messpunkt (20) oder dem Messbereich (30, 40, 50, 60),
- eine Spezifikation einer Art von Messpunkt (20),
- eine Spezifikation einer Größe eines Bereichs von Interesse (25) und/oder einer Anzahl von Messpunkten (20) in dem Bereich von Interesse (25) und
- eine Spezifikation einer Größe eines Messbereichs (30, 40, 50, 60).

9. Verfahren (100) nach einem der vorhergehenden Ansprüche, wobei das Identifizieren der mindestens einen vordefinierten Geste (2-9) in den Bildern (72) Verwenden eines Schätzalgorithmus einer menschlichen Körperhaltung umfasst, um eine Skelettdarstellung (10) des Körpers oder von Körperteilen des Bedieners (1) zu erzeugen, wobei das Erzeugen der Skelettdarstellung (10) Erkennen und Lokalisieren von Körperteilen und Gelenken des Körpers des Bedieners (1), insbesondere eines oder mehrerer Finger und/oder mindestens eines Ellenbogens (12) und eines Handgelenks (14) umfasst, insbesondere wobei das Bestimmen des Messpunkts (20) oder Messbereichs (30, 40, 50, 60) Folgendes umfasst
- Ableiten, basierend auf der Skelettdarstellung (10), einer Lokalisierung eines Ellenbogens (12) und eines Handgelenks (14) des Bedieners (1), einer Ellenbogen-Handgelenk-Achse (22) und/oder einer Achse (26), die durch einen Zeigefinger (16) definiert ist; und
- wobei das Bestimmen des Messpunkts (20) oder des Messbereichs (30, 40, 50, 60) Ableiten, basierend auf der Lokalisierung des Ellenbogens (12) und des Handgelenks (14), basierend auf der Ellenbogen-Handgelenk-Achse (22) und/oder basierend auf der Achse (26), die durch den Zeigefinger (16) definiert ist, eines Bereichs von Interesse (25) in dem mindestens einen Bild (72) umfasst,
insbesondere wobei die Skelettdarstellung (10) aus einem Bild (72) erzeugt wird, in dem die erste Geste (2-6) identifiziert wurde.

10. Verfahren (100) nach einem der vorhergehenden Ansprüche, wobei die ersten Gesten (2-6) eine Vielzahl von intuitiven Gesten umfassen, wobei die intuitiven Gesten eine oder mehrere Zeigegesten (2) umfassen, insbesondere wobei
- mindestens eine Teilmenge der vordefinierten Gesten (2-9) durch eine Stellung einer Hand des Bedieners (1) definiert ist, insbesondere wobei sich die Stellungen mindestens dadurch voneinander unterscheiden, dass unterschiedliche Finger der Hand gebeugt oder ausgestreckt sind, und
- der Gestenerkennungsalgorithmus dazu konfiguriert ist, die Stellung der Hand in dem mindestens einen Bild (72) zu erkennen.

11. Verfahren (100) nach einem der vorhergehenden Ansprüche, umfassend eine Anpassungsfunktionalität, die es dem Bediener (1) ermöglicht, eine Geste auszuwählen oder zu definieren, die einem Befehl in der Datenbank zuzuweisen ist, insbesondere wobei das Verfahren Folgendes umfasst
- Bereitstellen, auf einer grafischen Benutzeroberfläche eines Systems, das die Messvorrichtung (70) umfasst, einer Vielzahl von Befehlen für die Messvorrichtung (70) und einer Vielzahl von auswählbaren vordefinierten Gesten für den Bediener und Zuweisen, basierend auf einer Auswahl eines Befehls und einer Geste durch den Bediener, der ausgewählten Geste zu dem ausgewählten Befehl; und/oder
- Bereitstellen, auf einer grafischen Benutzeroberfläche eines Systems, das die Messvorrichtung (70) umfasst, einer Vielzahl von Befehlen für die Messvorrichtung (70) an den Bediener, Aufnehmen, durch die Aufnahmevorrichtung, von Bildern des Bedieners (1), Identifizieren einer benutzerdefinierten Geste in den Bildern unter Verwendung eines Gestenerkennungsalgorithmus und Zuweisen, basierend auf einer Auswahl eines Befehls durch den Bediener, der benutzerdefinierten Geste zu dem ausgewählten Befehl,
insbesondere wobei Machine Learning oder Deep Learning verwendet wird, um den Gestenerkennungsalgorithmus zu trainieren, um die ausgewählte oder definierte Geste zu identifizieren, wobei das Trainieren auf einer Vielzahl von Bildern des Bedieners (1) basiert, der die ausgewählte oder definierte Geste durchführt.

12. Verfahren (100) nach einem der vorhergehenden Ansprüche, wobei
- die Datenbank eine Vielzahl von Sprachbefehlen (15, 17) für die Messvorrichtung (70) umfasst,
- ein oder mehrere Sprachbefehle (15, 17) durch die Aufnahmevorrichtung empfangen werden und
- das Durchführen des Messvorgangs der Messvorrichtung (70) auch auf dem einen oder den mehreren empfangenen Sprachbefehlen (15, 17) basiert,
wobei die Sprachbefehle (15, 17) eines oder mehrere der Folgenden umfassen
- Auslösebefehle betreffend das Auslösen einer Messung für einen zuvor definierten Messpunkt (20) oder Messbereich (30, 40, 50, 60),
- Zielspezifikationsbefehle betreffend eine Spezifikation oder Modifikation des definierten Messpunkts (20) oder Messbereichs (30, 40, 50, 60),
- Modusauswahlbefehle betreffend das Auswählen eines von mindestens zwei unterschiedlichen Messmodi der Messvorrichtung (70) zum Messen eines definierten Messpunkts (20) oder Messbereichs (30, 40, 50, 60) und
- Modusspezifikationsbefehle betreffend eine Spezifikation oder Modifikation eines ausgewählten Messmodus der Messvorrichtung (70).

13. Messsystem, umfassend
- eine laserbasierte Messvorrichtung (70);
- eine Datenbank, die eine Vielzahl von vordefinierten Gesten (2-9) umfasst, wobei jede Geste einem Befehl für die Messvorrichtung (70) zugewiesen ist;
- eine Aufnahmevorrichtung, die dazu konfiguriert ist, Bilder (72) eines Bedieners (1) der Messvorrichtung (70) in einer Messumgebung (75) aufzunehmen, wobei die Aufnahmevorrichtung dazu konfiguriert ist, das eine oder die mehreren Bilder in einem Bildstrom aufzunehmen, und/oder mindestens eines der Folgenden umfasst
- eine Stereokamera,
- eine Laufzeitsensoranordnung,
- eine Infrarotkamera- oder -sensoranordnung,
- einen Musterprojektor und
- ein Mikrofon; und
- eine Recheneinheit, umfassend einen Gestenerkennungsalgorithmus, der dazu konfiguriert ist, Gesten in Bildern (72), die durch die Aufnahmevorrichtung aufgenommen werden, zu erkennen, wobei das Messsystem dazu konfiguriert ist, das Verfahren (100) nach einem der vorhergehenden Ansprüche durchzuführen.

14. Computerprogrammprodukt, umfassend Programmcode, der auf einem maschinenlesbaren Medium gespeichert ist oder durch eine elektromagnetische Welle, umfassend ein Programmcodesegment, verkörpert ist und aufweisend computerausführbare Anweisungen zum Durchführen, insbesondere bei Ausführung auf einer Computereinheit des Messsystems nach Anspruch 13, des Verfahrens (100) nach einem der Ansprüche 1 bis 12.

## Revendications

1. Procédé (100) de commande à distance d'un dispositif de mesure (70) basé sur un laser, le dispositif de mesure comprenant un dispositif de capture configuré pour capturer des images (72) d'un opérateur (1) du dispositif de mesure (70) dans un environnement de mesure (75), le procédé comprenant
- la fourniture d'une base de données comprenant une multitude de gestes (2 à 9) prédéfinis, chaque geste étant affecté à une commande pour le dispositif de mesure (70),
- la capture, par le dispositif de capture, d'images de l'opérateur (1),
- l'identification d'au moins un geste (2 à 9) prédéfini dans les images (72) à l'aide d'un algorithme de détection de gestes, et
- la réalisation d'une opération de mesure du dispositif de mesure (70),
dans lequel
- le dispositif de mesure (70) a au moins deux modes de mesure différents ;
- les commandes comprennent des commandes de définition de cible et des commandes de sélection de mode, dans lequel les commandes de définition de cible sont liées à la définition d'un ou de plusieurs points de mesure (20) ou d'une zone de mesure (30, 40, 50, 60) dans l'environnement de mesure (75) à mesurer par le dispositif de mesure (70), et les commandes de sélection de mode sont liées à la sélection d'un mode de mesure du dispositif de mesure pour mesurer le point de mesure (20) ou la zone de mesure (30, 40, 50, 60) défini (e) ;
- les images (72) comprennent au moins un premier geste (2 à 6) et un deuxième geste (7) réalisés par l'opérateur (1), dans lequel le premier geste est un geste prédéfini qui est affecté à une commande de définition de cible, et le deuxième geste (7) est un geste prédéfini qui est affecté à une commande de sélection de mode ; et
- l'identification de l'au moins un geste prédéfini dans les images (72) comprend l'identification du premier geste (2 à 6) et du deuxième geste (7),
**caractérisé en ce que**
- les images (72) comprennent une séquence de gestes dynamiques incluant au moins le premier geste (2 à 6) et le deuxième geste (7) ;
- l'algorithme de détection de gestes dérive, sur la base du premier geste (2 à 6) identifié, une région d'intérêt (25) dans l'au moins une image (72) et, sur la base du deuxième geste (7) identifié, un mode de mesure sélectionné ;
- un algorithme de détection de particularités et/ou un algorithme de détection d'objets sont utilisés pour détecter des particularités ou des objets dans la zone d'intérêt (25), lesquels particularités ou objets définissent les un ou plusieurs points de mesure (20) ou la zone de mesure (30, 40, 50, 60) ; et
- la réalisation de l'opération de mesure comprend l'utilisation du mode de mesure sélectionné pour automatiquement
- mesurer les un ou plusieurs points de mesure (20) définis en réalisant une ou plusieurs mesures en un point, ou
- balayer la zone de mesure (30, 40, 50, 60) définie, déterminant ainsi des coordonnées tridimensionnelles d'une multitude de points dans la zone de mesure (30, 40, 50, 60).

2. Procédé (100) selon la revendication 1, dans lequel l'identification du premier geste (2 à 6) comprend l'utilisation d'un algorithme d'apprentissage automatique ou d'un algorithme d'apprentissage profond pour détecter le premier geste (2 à 6) dans les images (72) et/ou pour classer le premier geste (2 à 6) détecté.

3. Procédé (100) selon la revendication 1, dans lequel le premier geste comprend un geste de pointage (2) et les commandes de définition de cible comprennent au moins une commande de définition de distance indiquant une distance entre le geste de pointage (2) et la région d'intérêt (25),
dans lequel les images (72) comprennent au moins un geste de définition de distance réalisé par l'opérateur (1),
dans lequel le geste de définition de distance est un geste prédéfini qui est affecté à une commande de définition de distance, l'identification de l'au moins un geste prédéfini dans les images (72) comprend l'identification du geste de définition de distance, et l'algorithme de détection de gestes est configuré pour déterminer, sur la base du premier geste (2 à 6) identifié et sur la base du geste de définition de distance identifié, la région d'intérêt (25) définie par l'opérateur (1).

4. Procédé (100) selon la revendication 1, dans lequel le premier geste comprend un geste (2) de pointage, et les commandes de définition de cible comprennent au moins une commande de définition de distance indiquant une distance entre le geste (2) de pointage et la zone d'intérêt (25),
dans lequel la base de données comprend une multitude de commandes vocales (15, 17) pour le dispositif de mesure (70), les commandes vocales comprenant l'au moins une commande parlée de définition de distance (17), l'au moins une commande parlée de définition de distance (17) est reçue par le dispositif de capture, et l'algorithme de détection de gestes est configuré pour déterminer, sur la base du premier geste (2 à 6) identifié et sur la base de la commande parlée de définition de distance (17), le point de mesure (20) défini par l'opérateur (1).

5. Procédé (100) selon l'une quelconque des revendications précédentes,
dans lequel les au moins deux modes de mesure différents comprennent un ou plusieurs parmi
- une mesure en un point, comprenant en particulier la détermination de coordonnées tridimensionnelles d'un point de mesure (20),
- un balayage d'une zone de mesure (30, 40, 50, 60), comprenant en particulier la détermination de coordonnées tridimensionnelles d'une multitude de points dans la zone de mesure, et
- un verrouillage sur un rétroréflecteur, comprenant en particulier la détermination de coordonnées tridimensionnelles du rétroréflecteur ;
en particulier dans lequel au moins une combinaison d'une commande de définition de cible et d'une commande de sélection de mode est inopérante, dans lequel
- l'identification du premier geste (2 à 6) comprend le fait d'ignorer, après qu'un deuxième geste (7) affecté à une commande de sélection de mode a été identifié, ces premiers gestes (2 à 6) qui sont affectés à une commande de définition de cible, dont une combinaison avec la commande de sélection de mode est inopérante ; et/ou
- l'identification du deuxième geste (7) comprend le fait d'ignorer, après qu'un premier geste (2 à 6) affecté à une commande de définition de cible a été identifié, ces deuxièmes gestes (7) qui sont affectés à une commande de sélection de mode, dont une combinaison avec la commande de définition de cible est inopérante.

6. Procédé (100) de commande à distance d'un dispositif de mesure (70) basé sur un laser, le dispositif de mesure comprenant un dispositif de capture configuré pour capturer des images (72) d'un opérateur (1) du dispositif de mesure (70) dans un environnement de mesure (75), le procédé comprenant
- la fourniture d'une base de données comprenant une multitude de gestes (2 à 9) prédéfinis, chaque geste étant affecté à une commande pour le dispositif de mesure (70),
- la capture, par le dispositif de capture, d'images de l'opérateur (1),
- l'identification d'au moins un geste (2 à 9) prédéfini dans les images (72) à l'aide d'un algorithme de détection de gestes, et
- la réalisation d'une opération de mesure du dispositif de mesure (70),
dans lequel le dispositif de mesure (70) a au moins deux modes de mesure différents,
**caractérisé en ce que**
- les commandes comprennent des commandes combinées liées à la mesure d'un point de mesure (20) ou d'une zone de mesure (30, 40, 50, 60) défini(e) avec un mode de mesure sélectionné par utilisateur du dispositif de mesure (70),
- les images (72) comprennent un geste (9) combiné, dans lequel le geste (9) combiné est un geste prédéfini affecté à une commande combinée,
- l'identification de l'au moins un geste prédéfini comprend l'identification du geste (9) combiné,
- l'algorithme de détection de gestes dérive, sur la base du geste (9) combiné identifié, une région d'intérêt (25) dans l'au moins une image (72) et un mode de mesure sélectionné,
- un algorithme de détection de particularités et/ou un algorithme de détection d'objets sont utilisés pour détecter des particularités ou des objets dans la région d'intérêt (25), lesquels particularités ou objets définissent les un ou plusieurs points de mesure (20) ou la zone de mesure (30, 40, 50, 60), et
- la réalisation de l'opération de mesure comprend l'utilisation du mode de mesure sélectionné pour automatiquement
- mesurer les un ou plusieurs points de mesure (20) définis en réalisant une ou plusieurs mesures en un point, ou
- balayer la zone de mesure (30, 40, 50, 60) définie, déterminant ainsi des coordonnées tridimensionnelles d'une multitude de points dans la zone de mesure (30, 40, 50, 60).

7. Procédé (100) selon l'une quelconque des revendications précédentes, dans lequel
- les commandes comprennent en outre des commandes de spécification de mode, chaque commande de spécification étant liée à une spécification ou à une modification du mode de mesure sélectionné ;
- les images (72) comprennent en outre un geste (8) de spécification réalisé par l'opérateur (1), dans lequel le geste (8) de spécification est un geste prédéfini qui est affecté à une commande de spécification de mode ;
- l'identification de l'au moins un geste (2 à 9) prédéfini dans les images (72) comprend l'identification du geste (8) de spécification ; et
- l'opération de mesure est réalisée avec la spécification ou la modification de la commande de spécification de mode à laquelle le geste (8) de spécification est affecté,
en particulier dans lequel les commandes de spécification comprennent une spécification d'une densité de points ou d'une vitesse de mesure dans un mode de balayage.

8. Procédé (100) selon l'une quelconque des revendications précédentes, dans lequel les commandes comprennent en outre au moins une commande de spécification de cible et/ou au moins une commande de déclenchement, dans lequel
- chaque commande de spécification de cible est liée à une spécification ou à une modification du point de mesure (20) ou de la zone de mesure (30, 40, 50, 60) défini(e) ;
- l'au moins une commande de déclenchement est liée au déclenchement d'une mesure sur un point de mesure (20) ou une zone de mesure (30, 40, 50, 60) défini(e) précédemment ;
- les images (72) comprennent en outre un geste (8) de spécification et/ou un geste de déclenchement réalisé par l'opérateur (1), dans lequel le geste (8) de spécification est un geste prédéfini qui est affecté à une commande de spécification de cible et le geste de déclenchement est un geste prédéfini qui est affecté à une commande de déclenchement ; et
- l'identification de l'au moins un geste (2 à 9) prédéfini dans les images (72) comprend l'identification du geste (8) de spécification et/ou du geste de déclenchement ;
dans lequel,
- si le geste (8) de spécification est identifié, l'opération de mesure est réalisée avec la spécification ou la modification de la commande de spécification de cible à laquelle le geste (8) de spécification est affecté, et
- si le geste de déclenchement est identifié, l'opération de mesure est réalisée lors de l'identification du geste de déclenchement,
en particulier dans lequel les commandes de spécification de cible comprennent au moins une parmi
- une spécification d'une distance entre un premier geste (2 à 6) et le point de mesure (20) ou la zone de mesure (30, 40, 50, 60),
- une spécification d'un type de point de mesure (20),
- une spécification d'une taille d'une région d'intérêt (25) et/ou d'un nombre de points de mesure (20) dans la région d'intérêt (25), et
- une spécification d'une taille d'une zone de mesure (30, 40, 50, 60).

9. Procédé (100) selon l'une quelconque des revendications précédentes, dans lequel l'identification de l'au moins un geste (2 à 9) prédéfini dans les images (72) comprend l'utilisation d'un algorithme d'estimation de pose humaine pour générer une représentation squelettique (10) du corps ou de parties de corps de l'opérateur (1), dans lequel la génération de la représentation squelettique (10) comprend la détection et la localisation de parties de corps et des articulations du corps de l'opérateur (1), en particulier un ou plusieurs doigts et/ou au moins un coude (12) et un poignet (14), en particulier dans lequel la détermination du point de mesure (20) ou de la zone de mesure (30, 40, 50, 60) comprend
- la dérivation, sur la base de la représentation squelettique (10), d'un emplacement d'un coude (12) et d'un poignet (14) de l'opérateur (1), d'un axe coude-poignet (22) et/ou d'un axe (26) défini par un index (16) ; et
- la détermination du point de mesure (20) ou de la zone de mesure (30, 40, 50, 60) comprend la dérivation, sur la base de l'emplacement du coude (12) et du poignet (14), sur la base de l'axe coude-poignet (22) et/ou sur la base de l'axe (26) défini par l'index (16), d'une région d'intérêt (25) dans l'au moins une image (72),
en particulier dans lequel la représentation squelettique (10) est générée à partir d'une image (72) dans laquelle le premier geste (2 à 6) a été identifié.

10. Procédé (100) selon l'une quelconque des revendications précédentes, dans lequel les premiers gestes (2 à 6) comprennent une pluralité de gestes intuitifs, les gestes intuitifs comprenant un ou plusieurs gestes (2) de pointage, en particulier dans lequel
- au moins un sous-ensemble des gestes (2 à 9) prédéfinis est défini par une posture d'une main de l'opérateur (1), en particulier dans lequel les postures diffèrent les unes des autres au moins par différents doigts de la main qui sont pliés ou tendus, et
- l'algorithme de détection de gestes est configuré pour détecter la posture de la main dans l'au moins une image (72).

11. Procédé (100) selon l'une quelconque des revendications précédentes, comprenant une fonctionnalité de personnalisation permettant à l'opérateur (1) de sélectionner ou de définir un geste à affecter à une commande dans la base de données, en particulier dans lequel le procédé comprend
- la fourniture, dans une interface utilisateur graphique d'un système comprenant le dispositif de mesure (70), d'une multitude de commandes pour le dispositif de mesure (70) et d'une multitude de gestes prédéfinis sélectionnables à l'opérateur, et le fait d'affecter, sur la base d'une sélection d'une commande et d'un geste par l'opérateur, le geste sélectionné à la commande sélectionnée ; et/ou
- la fourniture, dans une interface utilisateur graphique d'un système comprenant le dispositif de mesure (70), d'une multitude de commandes pour le dispositif de mesure (70) à l'opérateur, la capture, par le dispositif de capture, d'images de l'opérateur (1), l'identification d'un geste défini par utilisateur dans les images à l'aide d'un algorithme de détection de gestes, et le fait d'affecter, sur la base d'une sélection d'une commande par l'opérateur, le geste défini par utilisateur à la commande sélectionnée,
en particulier dans lequel un apprentissage automatique ou un apprentissage profond est utilisé pour entraîner l'algorithme de détection de gestes à identifier le geste sélectionné ou défini, dans lequel l'entraînement est basé sur une multitude d'images de l'opérateur (1) réalisant le geste sélectionné ou défini.

12. Procédé (100) selon l'une quelconque des revendications précédentes, dans lequel
- la base de données comprend une multitude de commandes vocales (15, 17) pour le dispositif de mesure (70),
- une ou plusieurs commandes vocales (15, 17) sont reçues par le dispositif de capture, et
- la réalisation de l'opération de mesure du dispositif de mesure (70) est également basée sur les une ou plusieurs commandes vocales (15, 17) reçues,
dans lequel les commandes vocales (15, 17) comprennent une ou plusieurs parmi
- des commandes de déclenchement liées au déclenchement d'une mesure sur un point de mesure (20) ou une zone de mesure (30, 40, 50, 60) défini(e) précédemment,
- des commandes de spécification de cible liées à une spécification ou à une modification du point de mesure (20) ou de la zone de mesure (30, 40, 50, 60) défini(e),
- des commandes de sélection de mode liées à la sélection d'un parmi au moins deux modes de mesure différents du dispositif de mesure (70) pour mesurer un point de mesure (20) ou une zone de mesure (30, 40, 50, 60) défini(e), et
- des commandes de spécification de mode liées à une spécification ou à une modification d'un mode de mesure sélectionné du dispositif de mesure (70).

13. Système de mesure, comprenant
- un dispositif de mesure (70) basé sur un laser ;
- une base de données comprenant une multitude de gestes (2 à 9) prédéfinis, chaque geste étant affecté à une commande pour le dispositif de mesure (70) ;
- un dispositif de capture configuré pour capturer des images (72) d'un opérateur (1) du dispositif de mesure (70) dans un environnement de mesure (75), le dispositif de capture étant configuré pour capturer les une ou plusieurs images dans un flux d'images et/ou comprenant au moins un parmi
- une caméra stéréo,
- un réseau de capteurs à temps de vol,
- une caméra infrarouge ou un réseau de capteurs infrarouges,
- un projecteur de motifs, et
- un microphone ; et
- une unité de calcul comprenant un algorithme de détection de gestes configuré pour détecter des gestes dans des images (72) capturées par le dispositif de capture,
dans lequel le système de mesure est configuré pour réaliser le procédé (100) selon l'une quelconque des revendications précédentes.

14. Produit-programme d'ordinateur comprenant un code de programme qui est stocké sur un support lisible par machine, ou qui est incarné par une onde électromagnétique comprenant un segment de code de programme, et ayant des instructions exécutables par ordinateur pour réaliser, en particulier lorsqu'il est mis en œuvre sur une unité d'ordinateur du système de mesure selon la revendication 13, le procédé (100) selon l'une quelconque des revendications 1 à 12.
